(19) Europäisches Patentamt
European Patent Office
Office européen des brevets

(11) **EP 1 588 461 B1**

(12) **EUROPÄISCHE PATENTSCHRIFT**

(45) Veröffentlichungstag und Bekanntmachung des Hinweises auf die Patenterteilung:
**04.04.2007  Patentblatt 2007/14**

(21) Anmeldenummer: **04705766.6**

(22) Anmeldetag: **28.01.2004**

(51) Int Cl.:
**H01S 3/08** (2006.01)

(86) Internationale Anmeldenummer:
**PCT/EP2004/000730**

(87) Internationale Veröffentlichungsnummer:
**WO 2004/068656 (12.08.2004 Gazette 2004/33)**

(54) **FALTVORRICHTUNG ZUR STRAHLFÜHRUNG IN EINEM LASER**

FOLD DEVICE FOR GUIDING BEAMS IN A LASER

DISPOSITIF REPLIE POUR GUIDER LE FAISCEAU DANS UN LASER

(84) Benannte Vertragsstaaten:
**DE FR GB**

(30) Priorität: **28.01.2003   US 442917 P**

(43) Veröffentlichungstag der Anmeldung:
**26.10.2005   Patentblatt 2005/43**

(73) Patentinhaber:
• **High Q Laser Production GmbH**
  **6845 Hohenems (AT)**
• **Kopf, Daniel**
  **6832 Röthis (AT)**
• **LEDERER, Max**
  **6861 Alberschwende (AT)**
• **Bünting, Udo**
  **6845 Hohenems (AT)**

(72) Erfinder:
• **KOPF, Daniel**
  **A-6832 Röthis (AT)**
• **BÜNTING, Udo**
  **26606 Aurich (DE)**
• **Die andere Erfinder haben auf ihre Nennung verzichtet.**

(74) Vertreter: **Harmann, Bernd-Günther et al**
**Büchel, Kaminski & Partner**
**Patentanwälte Est.**
**Austrasse 79**
**9490 Vaduz (LI)**

(56) Entgegenhaltungen:
**EP-A- 1 115 186         US-A- 5 651 021**
**US-A1- 2002 150 132     US-A1- 2003 063 884**
**US-B1- 6 272 156**

**Beschreibung**

Die Erfindung betrifft eine Laseranordnung nach dem Oberbegriff des Anspruchs 1.

Eine Anforderung an Laser-Set-ups für industrielle wie wissenschaftliche Anwendungen ist zunehmend die Kompaktheit des Aufbaus, die weitere Vorteile, wie z.B. eine bessere Abschottung des Lasers gegen Umwelteinflüsse, möglich macht. Allerdings sind die Längen der Strahlführung in einem Resonator entweder direkt physikalisch bedingt oder aber zumindest mit konkreten Vorteilen eines speziellen Aufbaus verbunden, so dass lange Strahlgänge bzw. freie Strahlstrecken und Kompaktheit gleichermassen erreicht werden sollen.

Dies gilt bspw. für Nd:YAG- oder Nd:Vanadat-basierte Laser, die mittels Modenkopplung betrieben werden. Diese Laser besitzen normalerweise Resonatoren in der Grössenordnung von 1,5 m oder länger und sind daher für Anwendungen mit dem Erfordernis besonderer Kompaktheit ohne weitere Massnahmen nicht geeignet. Eine solche Massnahme kann beispielsweise in der Kombination von Q-Switch und Modenkopplung bestehen, welche einen kompakten Laseraufbau erlaubt, der hohe Puls-Wiederholraten von mehr als 100 kHz mit gleichzeitigen, hohen Ausgangsleistungen verbindet. Eine solche Lösung wird beispielsweise in der WO 02/11252 beschrieben.

Sind solche alternative Massnahmen nicht möglich oder nicht vorteilhaft, kann zur Erreichung einer Kompaktheit auch eine Faltung des Strahlgangs vorgenommen werden, die durch eine Abfolge von Spiegeln einer aufeinander abgestimmten Geometrie realisiert wird. Beispiele für spezielle Anordnung und Abfolgen von Faltspiegeln sind beispielsweise aus der WO 02/060020 bekannt.

Neben dem Erfordernis einer, besonderen Kompaktheit besteht häufig die Notwendigkeit, einen Strahlgang inner- oder ausserhalb eines Resonators mehrmals durch ein Medium zu führen. Hierdurch kann der bei einem nur einmaligen Durchgang auftretender Effekt verstärkt werden oder eine Überlagerung verschiedener Teilstrahlen erreicht werden. Ein entscheidendes Kriterium für das Ausmass des zu erzielenden Effektes stellt dabei die Zahl der Durchgänge dar, die somit zu vergrössern ist. In den bisherigen Anordnungen wird die Erhöhung dieser Zahl jedoch zumeist zu einer Vergrösserung der Komplexität durch die notwendigen zusätzlichen Komponenten und deren Anordnung zueinander führen.

Beispielsweise kann durch einen mehrfachen Durchgang durch eine geeignete Komponente, wie z.B. einem Gires-Tournois-Interferometer oder einer anderen dispersiven Struktur, eine negative oder positive Dispersionskorrektur des Strahls realisiert werden, die über der eines einfachen Durchgangs liegt.

Beispiele für die Kombination von Teilstrahlen und eine mehrfache Nutzung eines Mediums sind beispielsweise aus der US 4,785,459 und der US 5,237,584 bekannt.

In der US 4,785,459 wird eine Vorrichtung zur Erzeugung eines Laserstrahls beschrieben, die eine Vielzahl von Laser-Medien und Faltspiegeln aufweist, die in einem zickzackförmigen Aufbau äquidistant angeordnet sind. Der Strahlgang des Resonators führt durch alle Laser-Medien hindurch, wobei diese an einer dem Resonator abgewandten Seite durch eine externe Lichtquelle gepumpt werden können.

Die US 5,237,584 zeigt einen Festkörperlaser mit transversalem Pumpen, das durch eine Vielzahl von mit äquidistantem Abstand linear angeordneten Laserdioden bewirkt wird. Innerhalb des Laser-Mediums wird der Strahl zickzackförmig von einer Laserdiode zur nächsten geführt, wobei jeweils eine Reflexion an der den Laserdioden gegenüberliegenden Innenseite des Mediums erfolgt.

Diese Lösungen zur Faltung eines Strahlgangs weisen eine Vielzahl von Einzelkomponenten auf, die jeweils separat gefasst, ausgerichtet bzw. justiert und fixiert werden müssen. Durch die Ausführung mit einzeln gegeneinander zu fixierenden Komponenten besteht dabei grundsätzlich die Gefahr, dass durch mechanische Einwirkungen eine Dejustierung einzelner Komponenten auftritt.

Auch führt der Strahlgang von einem Ende des Resonators zum anderen bzw. zum Laser-Medium stets durch die gleichen Reflexionspunkts, so dass die Teilstrahlen nicht separiert werden. Dies kann z.B. bei einer Verwendung von Materialien, die unter Lichteinwirkung degradieren, zu einer nur unvollständigen Ausnutzung des an sich zur Verfügung stehenden Materialvolumens führen. Auf der anderen Seite muss die Ausdehnung des Strahlquerschnitts auf den jeweiligen Reflexpunkt bzw. das diesen definierende Bauelement abgestimmt werden, so dass durch die Bauelemente der Strahlquerschnitt eingeschränkt wird, wobei durch Veränderungen in der Ausrichtung der Komponenten, z.B. durch äussere Einflüsse, zusätzlich ein Dejustierung entstehen kann. Auch wird hierdurch eine nachträgliche Änderung des Strahlprofils oder des Strahlverlaufs eingeschränkt.

Damit liegt der Erfindung die Aufgabe zugrunde, eine Vorrichtung bereitzustellen, die eine verbesserte Kompaktheit eines Lasers ermöglicht.

Die Ermöglichung einer erhöhten Anzahl von Durchgängen durch ein die Strahleigenschaften beeinflussendes Medium bei gleichzeitig kompaktem Aufbau stellt eine weitere Aufgabe dar.

Weitere Aufgaben bestehen in der Erhöhung der Flexibilität des Designs bezüglich nachträglicher Änderungen und einer erhöhten Robustheit gegen Umwelteinflüsse.

Weitere Aufgaben liegen auch in der verbesserten Separierung von Teilstrahlen sowie einer verbesserten Ausnutzung eines zur Verfügung stehenden Materialvolumens.

Diese Aufgaben werden erfindungsgemäss durch die Merkmale des Anspruchs 1, sowie durch die Merkmale der abhängigen ansprüche gelöst bzw. die Lösungen fortgebildet.

Die erfindungsgemässe Lösung dieser Aufgaben bzw. deren Fortbildung erfolgt durch die Verwendung einer Faltvorrichtung mit spezifischen Eigenschaften. Eine Faltvorrichtung weist wenigstens zwei aufeinander zulaufende bzw. verkippte reflektierende Ebenen auf, zwischen denen der Strahlgang geführt wird. Dabei können diese Ebenen sowohl Aussenflächen mehrerer spiegelnder Elemente als auch die Innenseiten eines einzigen Elements darstellen. D.h. die Reflexion findet an einem Übergang von wenigstens zwei Medien unterschiedlicher optischer Brechzahl statt.

Im Gegensatz zu Lösungen mit gewölbten Spiegeloberflächen, wie z.B. fokalen oder konfokalen Resonatoren, sind die Ebenen planar und leicht gegeneinander geneigt, so dass bei einer Verwendung innerhalb einer Cavity die Faltvorrichtung einen instabilen Resonator darstellt. Damit unterscheidet sich die erfindungsgemässe Faltvorrichtung auch von anderen Multi-Pass-Resonatoren wie z.B. einer Herriott-Zelle oder einer White-Zelle, wie sie beispielsweise in den Dokumenten N. H. Schiller, X. M. Zhao, X. C. Liang, L. M. Wang, and R. R. Alfano, Appl. Opt. 28, 946 (1989), J. B. Deaton, Jr., A. D. W. McKie, J. B. Spicer, and J. W. Wagner, Appl. Phys. Lett. 56, 2390 (1990), J. B. Deaton, Jr., and J. W. Wagner, Appl. Opt. 33, 1051 (1994) sowie D. Herriott, H. Kogelnik, and R. Kompfner, Appl. Opt. 3, 523 (1964) beschrieben werden. Im Vergleich zu solchen Anordnungen mit gekrümmten Oberflächen, insbesondere bei Verwendung von asphärische Oberflächen, stellen die Oberflächen der erfindungsgemässen Faltvorrichtung geringere Anforderung hinsichtlich Fertigungsaufwand und Fertigungspräzision.

Bevorzugterweise wird ein Grossteil des Strahlgangs zwischen nur zwei reflektierenden Flächen geführt, so dass die Zahl der Komponenten möglichst klein gehalten wird.

Jedoch können insbesondere auch Folgen von mehreren dieser Paare von spiegelnden Oberflächen zur Realisierungen von mehrstufigen, kompakten Aufbauten verwendet werden.

Erfindungsgemäss sind dabei die beiden Flächen nicht parallel orientiert, sondern in einem Winkel zueinander verkippt. Hierdurch wird der Abstand zwischen den Reflexpunkten verändert, so dass ein variierendes Spacing entsteht, welches die Teilstrahlen im Aufbau voneinander separiert. Durch den Winkel zwischen den beiden reflektierenden Ebenen verändert sich der Reflexionswinkel ständig. Für den einlaufenden Strahl, der hier mit seiner Ausbreitungsrichtung in Richtung auf die Faltvorrichtung geführt wird, erfährt der Winkel zur Flächennormalen von Reflexion zu Reflexion eine ständige Verringerung bis er an einem Umkehrpunkt zur Änderung der Ausbreitungsrichtung führt und der Strahl wieder zurück zum Punkt der Einkopplung in die Faltvorrichtung geführt wird.

Eine Faltvorrichtung kann erfindungsgemäss auch mit einem ein- oder verstellbaren Winkel zwischen den Ebenen ausgebildet werden, so dass die geometrischen Bedingungen der Reflexion dem jeweiligen Setup angepasst werden können.

Durch die Ausgestaltung der Faltvorrichtung als kontinuierliche Oberfläche entfallen bisherige Beschränkungen hinsichtlich Strahlquerschnitt und Justierung oder einer möglichen Verstellung von Faltspiegeln gegeneinander.

In einer einfachen Variante wird eine Faltvorrichtung durch zwei Laserspiegel gebildet, die einen im wesentlichen rechteckigen Querschnitt aufweisen und gegenüberliegend angeordnet sind. Beide Spiegel sind gegeneinander geringfügig verkippt und in diesem Beispiel im Inneren eines Laserresonators angeordnet. Nach Einkoppeln des Strahls in die Faltvorrichtung durchläuft der Strahl dieses Element grundsätzlich zickzackförmig, wobei sich jedoch die Abstände der Reflexionspunkte ständig ändern. Am Ende der Faltvorrichtung wird der Strahl zurückreflektiert oder ausgekoppelt und nach Reflexion an einem Spiegelelement, das beispielsweise auch als Strahlteiler zur Auskopplung des Laserstrahls dienen kann, wieder in die Faltvorrichtung zurückgeführt, so dass ein im Vergleich zum ersten Strahldurchgang anderer Strahlverlauf folgt.

Die Reflexion kann durch eine an sich bekannte Gestaltung von Oberflächen bzw. Grenzflächen bewirkt werden, wobei erfindungsgemäss auch reflexionsverstärkende oder reflexionsvermindernde Beschichtungen aufgebracht werden können.

Eine andere mögliche Ausführungsform besteht darin, die Faltvorrichtung als monolithische Struktur mit zwei leicht gegeneinander verkippten Aussenseiten, d.h. mit zwei nicht exakt parallelen Ober- bzw. Grenzflächen, auszuführen. Die Strahlführung erfolgt nun in einer zur ersten Ausführungsform ähnlichen Weise im Inneren der Struktur. Insbesondere kann das Laser-Medium so ausgebildet werden, dass es einen solchen Strahlgang aufweist und somit zugleich als Faltvorrichtung wirkt.

Zur Verstärkung von strahlbeeinflussenden Effekten, beispielsweise durch eine multiple Führung durch eine Schicht, kann in einer weiteren Ausführungsform eine oder beide reflektierende Oberflächen gleichzeitig als eine solche strahlbeeinflussende Struktur ausgebildet werden.

Beispielsweise kann als eine der beiden reflektierenden Flächen eine dispersive Struktur, wie z.B. ein Gires-Tournois-Interferometer, Verwendung finden. Alternativ kann auch eine vollständige Führung in einer Schicht oder einem entsprechenden Körper realisiert werden. Damit kann ein Dispersionsmanagement in Cavity-gedumpten Oszillatoren sowie regenerativen Verstärkern erreicht werden. Je nach Anwendung kann erfindungsgemäss eine wählbare positive oder negative Dispersion erzeugt werden, welche durch andere Mittel, wie z.B. durch Prismenstrecken und/oder einzelne Gires-Tournois-Interferometer, nicht in hinreichender Kompaktheit realisierbar sind.

Grundsätzlich können die Ober- oder Grenzflächen der Faltvorrichtung auch durch weitere bzw. andersartige optische Komponenten ersetzt oder ergänzt werden. Insbesondere können spezielle diffraktive Strukturen, z.B. Hologramme, zur Strahlführung oder - beeinflussung verwendet werden.

Gleichermassen ist die Verwendung einer Faltvorrichtung nicht auf die Positionierung innerhalb eines Laser-Resonators beschränkt. Beispielsweise kann eine Faltvorrichtung sowohl innerhalb als auch ausserhalb des Resonators zur Streckung (stretcher) oder Kompression (compressor) von Pulsen verwendet werden.

Erfindungsgemäss können auch mehrere Faltvorrichtungen hinter- oder übereinander kombiniert werden, wobei zusätzliche Kompaktheit im Aufbau oder eine Erfüllung spezieller Anforderungen an die Komponenten möglich wird. So können beispielsweise zwei Faltvorrichtungen kombiniert werden, bei denen das eine zur optimalen Faltung der freien Strahlstrecke und damit zu Verringerung der Baulänge dient, wohingegen die zweite Faltvorrichtung hinsichtlich einer Dispersionskorrektur optimiert ist.

Durch die Faltvorrichtung ergibt sich jedoch eine erhöhte Justageempfindlichkeit des Lasers, da sich bei Verkippung aus dem optimal eingestellten Zustand heraus die Strahllage des Lasermodes verschieben kann. Hierdurch kann die Einhaltung der Laserbedingungen, d.h. z.B. senkrechtes Auftreffen des Lasermodes auf den Endspiegel beim Stehende-Wellen-Resonator, beeinträchtigt bzw. verhindert werden. Durch eine Verschiebung der Strahllage im Lasermedium aus dem angeregten Pumpspot heraus ergibt sich ein weniger optimaler Überlapp zwischen Lasermode und Pumpspot, so daß die Leistung abnimmt bzw. nicht mehr im Optimum liegt.

Bei den multiplen Reflexionen in einer Faltvorrichtung werden reflektierende Elemente, z.B. Spiegeloberflächen, mehr als einmal zur Reflexion benutzt. Damit akkumuliert sich eine Winkelabweichung mit der Anzahl Reflektionen. Bei einem Justagefehler der beiden reflektierenden Elemente zueinander kann dies zu einer unerwünscht hohen Empfindlichkeit der optischen Elemente führen. Unter Justagefehler sollen in diesem Zusammenhang auch andere Fehler gleichartiger Auswirkung berücksichtigt werden, wie sie beispielsweise aufgrund von Form- bzw. Fertigungsfehlern entstehen können. Um solche Justagefehler zu vermeiden, lässt sich das optische Layout des Lasers (Auslegung der Kavität) bzw. die Anordnung aller Laserelemente gezielt optimal aufeinander abstimmen. Konkret werden die Lage der Faltvorrichtung innerhalb des Resonators, die umliegenden optischen Resonatorelemente, die Anzahl der Reflexionen in der Faltvorrichtung sowie der Abstand der reflektierenden Elemente in der Faltvorrichtung zur Reduktion der Justageempfindlichkeit berücksichtigt.

Zur Modellierung und Berechnung stehen dem Fachmann allgemein geeignete Ansätze zur Verfügung, wie z.B. die in Siegman, A.E., "Lasers", University Science Books, 1986, ISBN: 0935702113 beschriebene ABCDEF-Matrizenmethode.

Ein um einen Fehlerwinkel $\delta$ verkippte Faltvorrichtung kann als - entfaltete - optische Strecke der Länge 2NL beschrieben werden, wobei L den Abstand der reflektierenden Elemente und N die Zahl der Reflexionen beschreibt. In der Mitte dieser Strecke liegt dann im Fehlerfall ein um $2 \cdot N \cdot \delta$ misalignierter Spiegel. Dieses vereinfachte, aber korrekte Bild erleichterte die Ableitung fehlerinsensitiver Anordnungen aus Faltvorrichtung und einem zur Berücksichtigung des Fehlers geeigneten Anpassungselement.

Zur Berücksichtigung des Justagefehlers sind grundsätzlich zwei Ansätze geeignet. Zum einen kann eine direkte Korrektur des Fehlers erfolgen, z.B. durch eine Umkehr des Strahlgangs durch die fehlerhaftete Faltvorrichtung. Eine solche Umkehr kann beispielsweise durch einen gekrümmten Spiegel bewirkt werden, der den Strahl für jeden Ausfallswinkel aus den reflektierenden Elementen der Faltvorrichtung in sich selbst oder leicht versetzt zurückreflektiert.

Zum anderen kann der Strahlgang so beeinflußt werden, dass ohne eigentliche Korrektur des Fehlers die Laserbedingungen eingehalten werden. Insofern wird der Fehler in kauf genommen, dessen Auswirkungen aber kompensiert bzw. neutralisiert. Ein Beispiel für eine solche Lösung kann realisiert werden, indem eine Faltvorrichtung so in einem Resonator plaziert wird, dass die Faltvorrichtung an einem Ende der Kavität liegt, gefolgt von einer Linse mit einer Brennweite von $f = 2 \cdot N \cdot L/2$ und dem Ende der Kavität mit planarem Endspiegel.

Bei richtiger Wahl der Fokuslänge - nämlich $f = N \cdot L$ - und Lage der Linse - nämlich gleich an die Faltvorrichtung anschließend - resultiert die Situation, dass bei einem Justagefehler die Laserbedingung nicht betroffen ist und somit der Laser trotz Fehler in seiner Funktionsfähigkeit nicht eingeschränkt ist. Somit hängt die Laserleistung nicht von einem Justagefehler oder andersartigem Fehler gegenüber der Sollauslegung ab, bzw. die Faltvorrichtung ist bzgl. Winkelverstellungen unempfindlich. Dies gilt jedenfalls für kleine $\delta$, solange der Strahlversatz noch innerhalb der Apertur der optischen Elemente liegt, insbesondere innerhalb der Linsenapertur. Anstelle einer einzelnen Linse kann der Fachmann auch allgemeine ABCD-Optiken ableiten, welche einen gleichwertigen Effekt hervorrufen.

Beispielsweise wird für eine zweifach und symmetrisch durchlaufene Faltvorrichtung der resultierende Strahlversatz und die Strahlverkippung bei Justagefehlern durch geeignete Wahl einer Linse mit $f=2 \cdot N \cdot L/4=N \cdot L/2$ minimiert, da dieser durch die Linse beim zweiten Durchlauf wieder rückgängig gemacht wird. Dieses symmetrische Beispiel kann auf speziell zurechtgelegte unsymmetrische Anordnungen analog angewendet werden. Der Fachmann kann auch hier anstelle der Linse wiederum ein äquivalentes optisches Element oder System mit ähnlichem fehlerkompensierenden Effekt ableiten. Dieses kann aus mehreren Linsen, gekrümmten Spiegeln und Strecken bestehen. Dabei ist der Fachmann beim Einbau einer kompensierten Faltvorrichtung in den Resonator allgemein darauf bedacht, neben obigen Anordnungen zur Erreichung reduzierter Sensitivität auch in Bezug auf Modenstabilität einen Resonator aufzubauen, der stabil ist und gleichzeitig auf den wichtigen Laserelementen wie Lasermedium und sättigbarem Absorber einen geeigneten Lasermodenradius aufweist.

Die dargestellte Überlegungen und Maßnahmen zur Reduzierung der Empfindlichkeit gegenüber Justagefehlern können dabei nicht nur bezüglich einer Verwendung der Faltvorrichtung innerhalb einer Kavität sondern auch für Anordnungen ausserhalb der Kavität verwendet werden. Dabei sind die kompensatorischen bzw. neutralisierenden Wirkungen neben ihrer Anwendbarkeit auf reflektierende Elemente mit einem positiven Öffnungswinkel auch für Anordnungen mit strikt parallelem Verlauf, wie z.B. ein planparalleles Spiegelpaar, geeignet.

Die Faltvorrichtung und damit realisierbare Laser werden nachfolgend anhand von in der Zeichnung schematisch dargestellten Ausführungsbeispielen rein beispielhaft näher beschrieben. Im einzelnen zeigen

Fig.1    die schematische Darstellung eines Aufbaus eines Lasers des Stands der Technik mit einer Folge aus mehreren Faltspiegeln;

Fig.2    die schematische Darstellung der Reflexionsbedingungen zwischen zwei reflektierenden Flächen;

Fig.3    die schematische Darstellung des Strahlgangs bei Umkehr der Ausbreitungsrichtung;

Fig.4    die schematische Darstellung einer ersten Faltvorrichtung mit zwei reflektierenden Elementen;

Fig.5    die schematische Darstellung einer ersten Faltvorrichtung mit zusätzlichem Umlenkspiegel;

Fig.6    die schematische Darstellung einer zweiten Faltvorrichtung in asymmetrischer Ausführung;

Fig.7    die schematische Darstellung einer dritten Faltvorrichtung in asymmetrischer Ausführung mit zwei planaren Sektoren;

Fig.8    die schematische Darstellung einer Folge Faltvorrichtungen in horizontaler Anordnung;

Fig.9    die schematische Darstellung einer vierten Faltvorrichtung in monolithischer Bauweise;

Fig.10   die schematische Darstellung einer fünften Faltvorrichtung in monolithischer Bauweise mit Brewster-Fenster;

Fig.11   die schematische Darstellung einer sechsten Faltvorrichtung in monolithischer Bauweise mit doppeltem Brewster-Fenster;

Fig.12   die schematische Darstellung einer siebten Faltvorrichtung in monolithischer Bauweise mit zwei planaren Sektoren;

Fig.13   die schematische Darstellung eines Lasers-Setups mit einer Faltvorrichtung;

Fig.14   die schematische Darstellung der Anordnung eines Lasermediums zwischen den Flächen einer Faltvorrichtung;

Fig.15   die schematische Darstellung einer Faltvorrichtung mit einem ersten Ausführungsbeispiel eines Anpassungselements;

Fig.16   die geometrischen Verhältnisse beim Auftreten von Justagefehlern für eine erfindungsgemäße Faltvorrichtung;

Fig.17a-c die schematische Darstellung der Funktion des ersten Ausführungsbeispiels eines Anpassungselements;

Fig.18   die schematische Darstellung einer Faltvorrichtung mit einem zweiten Ausführungsbeispiel eines Anpassungselements;

Fig.19a-c die schematische Darstellung der Funktion des zweiten Ausführungsbeispiels eines Anpassungselements und

Fig.20a-b    die schematische Darstellung der Anpassung des Strahlgangs an Justagefehler der Faltvorrichtung.

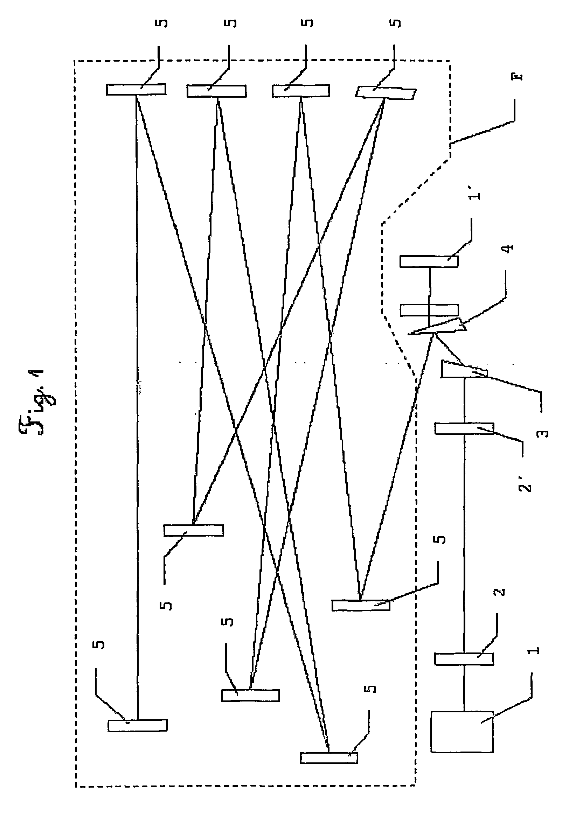

In Fig.1 wird ein Laser-Set-up des Stands der Technik beschrieben, das ein System aus Faltspiegeln zur Reduzierung der Baulänge verwendet. Der Laser besteht im wesentlichen aus einer Pump-Laserquelle 1, z.B. einer Laserdiode, die über eine Übertragungsoptik aus einer kollimierenden Linse 2 und einer fokussierenden Linse 2' ein Lasermedium 3 pumpt, das Bestandteil des Laser-Resonators ist, wobei das Lasermedium 3 aber auch ein Ende des Resonators darstellen kann. Eine zweite Pump-Laserquelle 1' wird verwendet, um von einer anderen Seite her über das Prisma 4 Licht in das Lasermedium 3 einzukoppeln. Über dieses Prisma 4 wird der Strahlgang in den gefalteten Teil F des Resonators geführt. Dieser Teil F beinhaltet eine Abfolge von speziell positionierten Faltspiegeln 5, die eine grosse freie Strahlstrecke auf eine kompakte Grundfläche reduzieren. Durch die Grosse an Zahl von Faltspiegeln 5 und das Erfordernis einer genauen Ausrichtung wird der Set-up komplex und anfällig gegenüber Fehlern und Störungen bzw. Umwelteinflüssen.

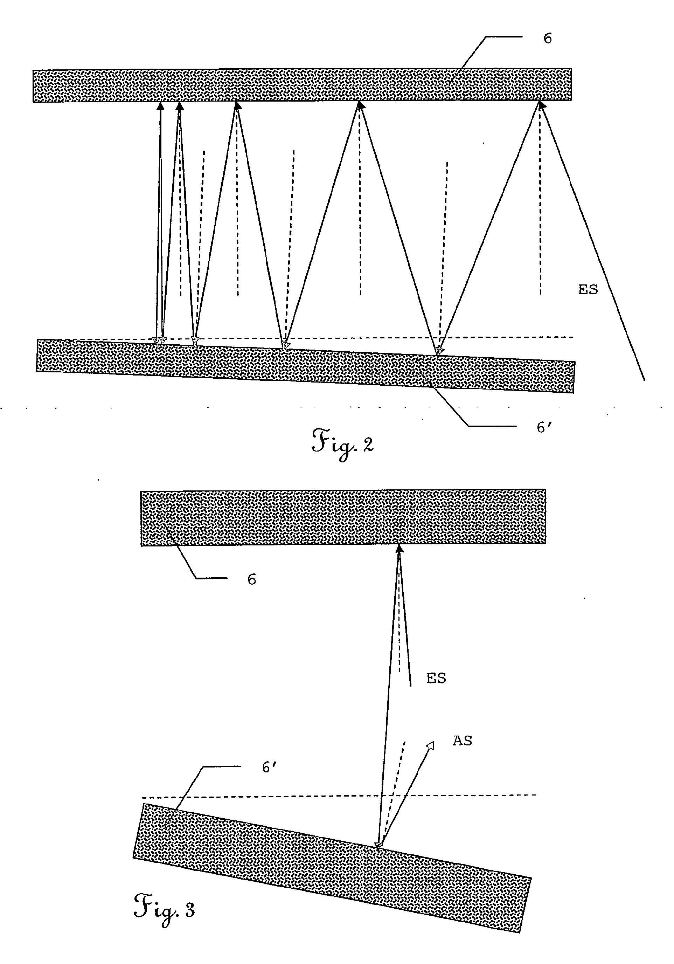

Fig.2 zeigt die Abfolge von Reflexionen zwischen zwei reflektierenden Flächen in einer ersten Ausführungsform der Faltvorrichtung. In dieser Variante wird die Faltvorrichtung durch zwei reflektierende Elemente 6 und 6' gebildet, die so gegeneinander gewinkelt angeordnet sind, dass ein in dieser Figur von rechts kommender einfallender Strahl ES nach einer Vielzahl von Reflexionen wieder nach rechts zurückreflektiert wird. Gestrichelt eingezeichnet sind die Flächennormalen der beiden Elemente 6 und 6'. Der Winkel zwischen der Flächennormalen und dem Strahl wird aufgrund der Stellung der beiden Elemente von rechts nach links immer kleiner, bis er fast der Normalen entspricht.

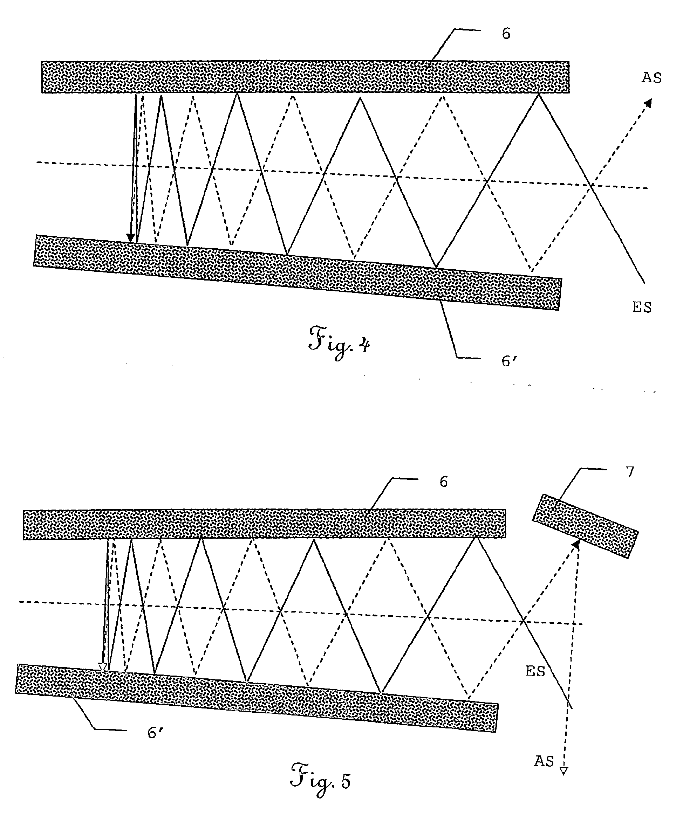

Diese Situation mit einem Einfallswinkel nahe der Flächennormalen ist in Fig.3 verdeutlicht. Der auf die Oberfläche des Elements 6 einfallende Strahl ES wird zurückreflektiert und von der Oberfläche des Elements 6' als ausfallender Strahl AS in die entgegengesetzte Ausbreitungsrichtung zurückreflektiert. Der dargestellte Abstand der Elemente 6 und 6' ist nicht massstäblich sondern nur in Hinblick auf die Verdeutlichung der erfindungsgemässen Wirkungsweise gewählt.

In Fig.4 wird schematisch ein möglicher Strahlengang in einer ersten Ausführungsform der Faltvorrichtung dargestellt. Der einfallende Strahl ES (durchgezogene Linie) wird an den beiden Elementen 6 und 6' mit ständig abnehmender Distanz zwischen den Reflexionspunkten mehrfach reflektiert bis er an einem Umkehrpunkt wieder in die entgegengesetzte Ausbreitungsrichtung reflektiert wird und in zum Einfall ähnlicher Weise die Faltvorrichtung als ausfallender Strahl AS (gestrichelte Linie) wieder verlässt. Diese Ausführungsform kann beispielsweise auch als eines der beiden Elemente 6 oder 6' eine Struktur mit einer Schicht mit dispersiven Eigenschaften in oder auf einer reflektierenden Schicht aufweisen, so dass durch die Vielzahl der Reflektionen ein häufiger Durchgang durch diese Schicht und eine entsprechende Dispersionskorrektur erfolgt.

In Fig.5 ist die Faltvorrichtung aus Fig.4 dargestellt, bei der über einen zusätzlichen Umlenkspiegel 7 eine Reflexion des ausfallenden Strahls AS in Richtung der Einkopplung des einfallenden Strahls erfolgt. Je nach Orientierung des Umlenkspiegels 7 kann die Position einer den ausfallenden Strahl aufnehmenden Komponente gewählt werden, so dass eine kompakte Anordnung der Komponenten des Lasers möglich wird.

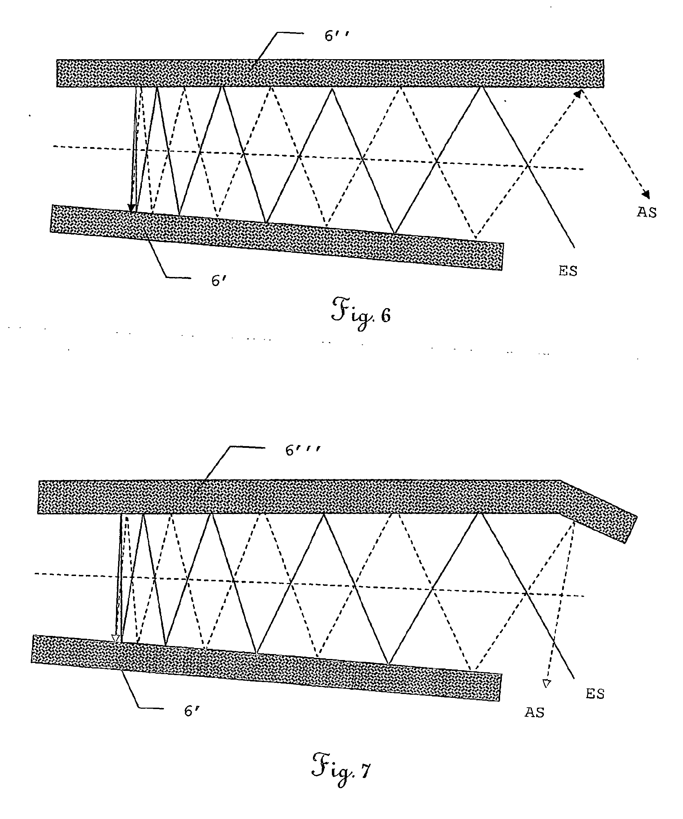

Fig.6 zeigt die Integration der Umlenkwirkung aus Fig.5 in die Faltvorrichtung. Durch eine unterschiedliche Länge der beiden Elemente 6' und 6" und somit einer eine asymmetrischen Ausgestaltung erfolgt eine Reflexion des ausfallenden Strahls AS ungefähr parallel zum einfallenden Strahl ES, so das Ein- und Austritt der Strahlen auf der gleichen Seite der Faltvorrichtung erfolgen.

Eine erfindungsgemässe Integration der Wirkung des Umlenkspiegels aus Fig.5 in die Faltvorrichtung wird in Fig.7 dargestellt. Das Element 6''' weist nun gegenüber dem Element 6' eine grössere Länge und zwei planare Sektoren auf, die einen unterschiedlichen Winkel ihrer Flächennormalen besitzen. Damit wird die Wirkung eines separaten Umlenkspiegels in das einstückige Element 6''' integriert.

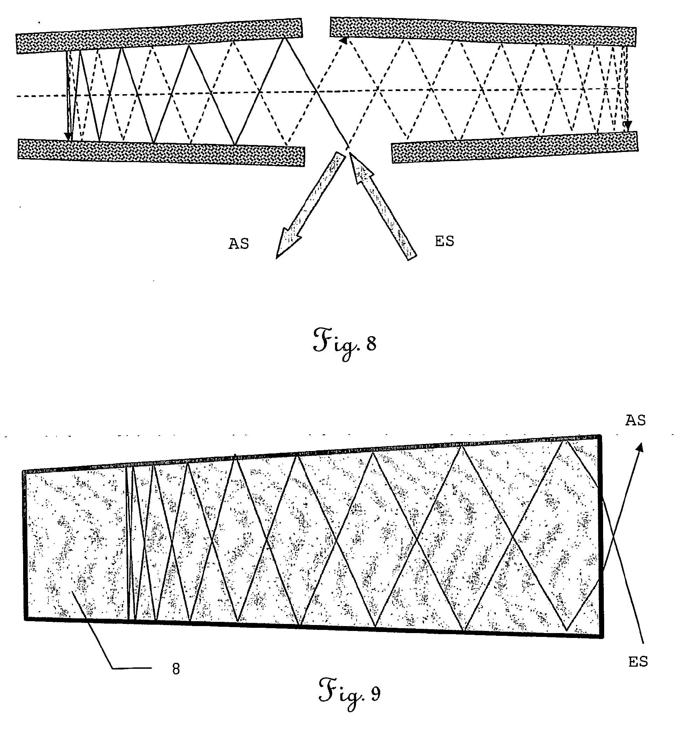

In Fig.8 wird die Kombination der ersten Ausführungsform und der zweiten Ausführungsform der Faltvorrichtung in horizontaler Folge dargestellt. Beide Faltvorrichtungen sind mit ihrer Öffnung, die hier als Seite mit grösserer Öffnung zu verstehen ist, zueinander orientiert. Nach Durchlaufen der links angeordneten ersten Ausführungsform tritt der Strahl in die zweite Ausführungsform ein, aus der dieser Strahl nach dem Durchlaufen wieder ausgekoppelt wird. Wiederum treten durch Verwendung der zweiten Ausführungsform einfallender Strahl ES und ausfallender Strahl AS auf der gleichen Seite der kombinierten Faltvorrichtungen ein und aus, wobei hier allerdings keine parallel Strahlführung erfolgt. Durch das Hinzufügen weiterer Komponenten oder eine andersartige Gestaltung oder Anordnung der Faltvorrichtungen können weitere speziell ausgestaltete Strahlsführung bewirkt werden. So können Faltvorrichtungen erfindungsgemäss auch in mehreren unterschiedlichen Ebenen übereinander oder versetzt angeordnet werden, z.B. in einer kaskadenförmigen Abfolge.

Fig.9 zeigt eine vierte Ausführungsform der Faltvorrichtung. In einer zur Fig.4 ähnlichen Weise erfolgt die Strahlführung innerhalb eines monolithischen Körpers 8, wobei die Reflexion an der Innenseite des Körpers 8, d.h. an dessen Grenzflächen, stattfindet. Der monolithische Körper 8 weist hierfür einen trapezförmigen Längsschnitt auf, wobei der einfallende Strahl ES an der breiteren Seite eintritt und nach Reflexionen und Umkehr der Ausbreitungsrichtung dort auch wieder austritt. Das Material des monolithischen Körpers 8 kann beispielsweise spezielle dispersive Eigenschaften aufweisen oder aber das Laser-Medium darstellen. Anwendungsseitig kann damit beispielsweise eine Vorkompensation von Dispersion erfolgen, die z.B. in den Objektiven eines Mikroskops für Multi-Photon-Imaging gesammelt wird. Weitere Anwendungsmöglichkeiten durch Wahl geeigneter Materialien des monolithischen Körpers 8 bestehen hinsichtlich nichtlinearer optischer Effekte, wie z.B. bei Optisch-Parametrischen-Oszillatoren (OPOs) oder der zur Frequenzvervielfachung. Jedoch ist eine erfindungsgemässe Faltvorrichtung auch ohne spezielle Eigenschaften des Materials zur Beeinflussung der Strahlung, z.B. unter Verwendung von optischen Gläsern, realisierbar, wenn z.B. Vorteile hinsichtlich der mechanischen Stabilität ausgenutzt werden sollen.

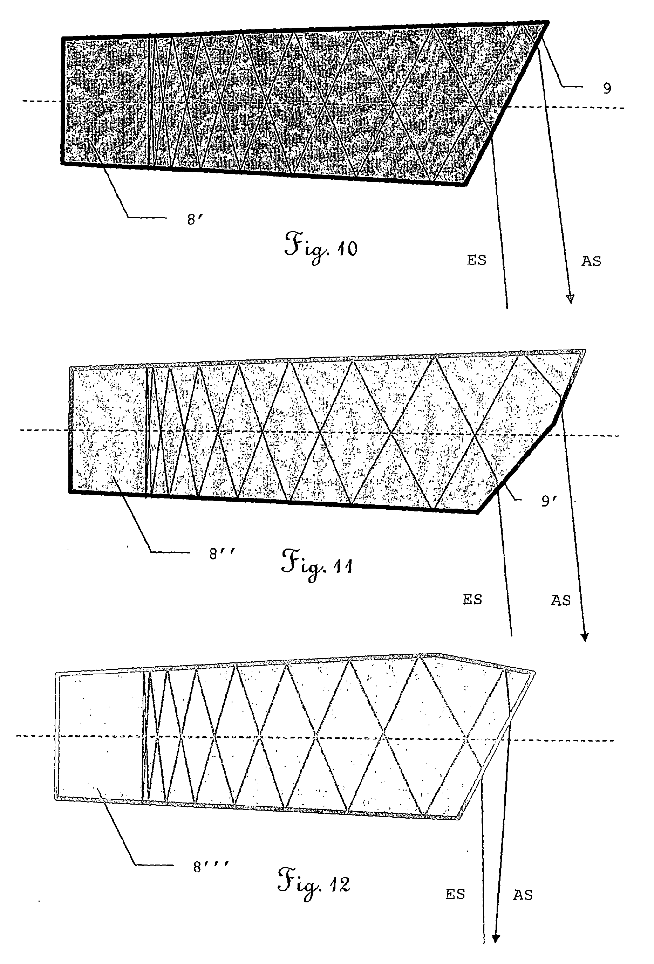

In Fig.10 wird eine in einer zur Fig.6 analogen Weise abgewandelte fünfte Ausführungsform einer Faltvorrichtung in monolithischer Bauweise dargestellt, die auf der vierten Ausführungsform beruht. Statt eines trapezförmigen Längsschnittes weist diese Ausführungsform auf der Ein- bzw. Austrittsseite ein Brewster-Fenster auf. Da der ausfallende Strahl AS eine Reflexion mehr durchläuft als der einfallende Strahl ES, ist dessen Winkel gegenüber dem Brewster-Fenster 9 ungleich dem des einfallenden Strahls ES nah seinem Durchgang durch die Grenzfläche, so dass durch eine einzige Fläche das Brewster-Gesetz nicht exakt für beide Strahlen eingehalten werden kann. Beide Strahlen verlaufen zudem leicht divergent. Allerdings bietet diese Ausführungsform den Vorteil einer einfachen Herstellung.

Eine Anpassung des Brewster-Fensters 9' an die Reflexionsbedingungen zeigt Fig.11. Durch eine Aufteilung des Brewster-Fensters 9' in zwei gegeneinander gewinkelte planare Sektoren erlaubt eine unterschiedliche Orientierung für einfallenden Strahl ES und ausfallenden Strahl AS. Durch die Verwendung dieser zwei Abschnitte mit unterschiedlichem Winkel zur Längsachse des Körpers 8'' kann die Brewster-Bedingung sowohl für einfallenden Strahl ES als auch ausfallenden Strahl AS gewährleistet werden.

Eine Variante mit einer Konvergenz von einfallendem Strahl ES und ausfallendem Strahl AS zeigt Fig.12. Ein monolithischer Körper 8''' wird in einer zu der in Fig.7 dargestellten Ausführungsform ähnlichen Weise ausgebildet. Hierzu wird eine reflektierende Seite des Körpers 8''' mit zwei planaren Sektoren ausgebildet, die gegeneinander gewinkelt sind, so dass die letzte Reflektion des ausfallenden Strahls in ihrem Winkel gegenüber dem Austrittsfenster variiert bzw. modifiziert, z.B. durch entsprechenden Anschliff des Körpers 8''', werden kann. Nach einer Reflexion unter diesen Winkel tritt der ausfallende Strahl AS so durch das Austrittsfenster, dass er zum einfallenden Strahl ES hin gebrochen wird.

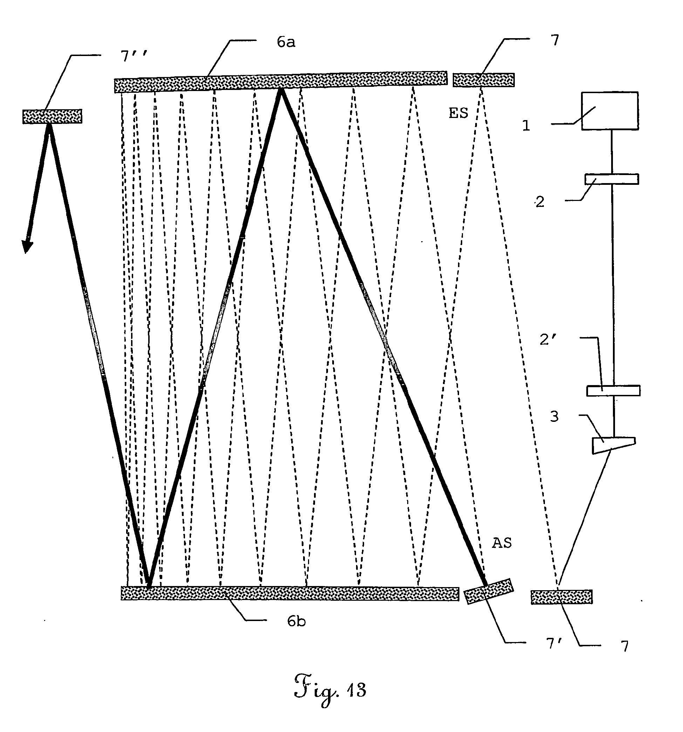

Fig.13 zeigt exemplarisch die Verwendung einer Faltvorrichtung in einem Laser-Set-up. Der hier nur durch einige seiner Komponenten dargestellte Laser weist eine Pump-Laserquelle 1 auf, z.B. einer Laserdiode, die über eine Übertragungsoptik aus einer kollimierenden Linse 2 und einer fokussierenden Linse 2' ein Lasermedium 3 pumpt. Nach dem Austritt aus dem Lasermedium 3 wird der Strahl über mehrere Umlenkspiegel 7 zur Faltvorrichtung geführt. Diese Umlenkspiegel 7 dienen sowohl der Strahlführung als auch der Justierung beim Eintritt in die Faltvorrichtung. In der die beiden Elemente 6a und 6b aufweisenden Faltvorrichtung wird der einfallende Strahl ES mehrfach hin- und her reflektiert, so dass eine gefaltete Strahlstrecke resultiert. Nach Durchlaufen der Faltvorrichtung wird der ausfallende Strahl AS über einen weiteren Umlenkspiegel 7' zurück in die Faltvorrichtung reflektiert und nach dem Durchlaufen der Faltvorrichtung in nur einer Richtung über einen Auskoppelspiegel 7'' aus dem Resonator geführt. In diesem Beispiel ist der weitere Umlenkspiegel 7' so orientiert, dass der ausfallende Strahl AS in der Faltvorrichtung nur zweimal reflektiert wird. Obwohl in diesem Beispiel eine Faltvorrichtung innerhalb des Laserresonators plaziert ist, bleibt die mögliche Verwendung einer Faltvorrichtung nicht auf diese Anordnung beschränkt, sondern kann auch alternativ oder zusätzlich ausserhalb des Resonators angeordnete Faltvorrichtungen aufweisen.

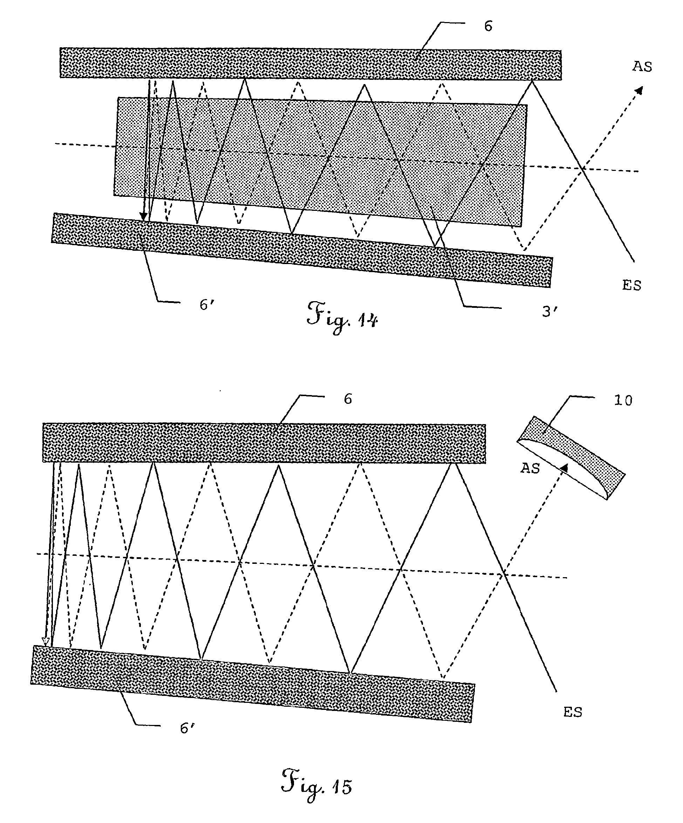

In Fig.14 wird schematisch die mögliche Anordnung des Lasermediums 3' oder eines anderen aktiven Materials im Strahlengang einer ersten Ausführungsform der Faltvorrichtung dargestellt. Der einfallende Strahl ES (durchgezogene Linie) wird an den beiden Elementen 6 und 6' mit ständig abnehmender Distanz zwischen den Reflexionspunkten mehrfach reflektiert, wobei er nach jeder Reflexion wieder durch das Lasermedium 3' hindurch geführt wird. Nach erfolgtem Durchgang durch Faltvorrichtung und Lasermedium 3' verläßt der ausfallende Strahl AS die Anordnung.

Fig.15 zeigt die schematische Darstellung einer Faltvorrichtung mit einem ersten Ausführungsbeispiel eines Anpassungselements zur Berücksichtigung von Justagefehlern durch eine Kompensation des Fehlers. Der in die Faltvorrichtung aus zwei reflektierenden Elementen 6 und 6' einfallende Strahl ES erfährt multiple Reflexionen, bei denen ein anfänglich geringer Justagefehler durch die Vielzahl von Reflexionen verstärkt bzw. akkumuliert wird. Jedoch kann ein fehlerbehafteter Strahlgang so geführt werden, dass trotz eines möglicherweise auftretenden Fehlers alle systembedingten Anforderungen eingehalten werden. Im ersten Ausführungsbeispiel erfolgt eine Fehlerkorrektur durch einen den reflektierenden Elementen 6 und 6' nachgeordneten und in ein oder zwei Ebenen gekrümmten Spiegel 10. Dieser Spiegel 10 ist dabei so ausgerichtet, dass ein ungestörter ausfallender Strahl AS in der Mittelsenkrechten einfällt. Der Krümmungsradius des Spiegels 10 wird so gewählt, dass eine fehlerbedingte Abweichung von dieser Mittelsenkrechten zu einer Reflexionsrichtung führt, welche eine Korrektur des Fehlers bewirkt. Dabei kann der Spiegel sphärisch, asphärisch aber auch astigmatisch ausgebildet sein und insbesondere für unterschiedliche Ebenen, z.B. parallel und senkrecht zu den Flächen der reflektierenden Elemente 6 und 6', verschiedene Krümmungsradien aufweisen. Ein planarer Spiegel würde bereits bei geringen Abweichungen vom senkrechten Einfall den Strahl nicht mehr korrekt zurück reflektieren. Durch eine geeignete Krümmung des Spiegels 10 kann trotz justagefehlerbedingte Abweichungen der ausfallende Strahl AS wieder in sich zurück oder leicht versetzt reflektiert werden.

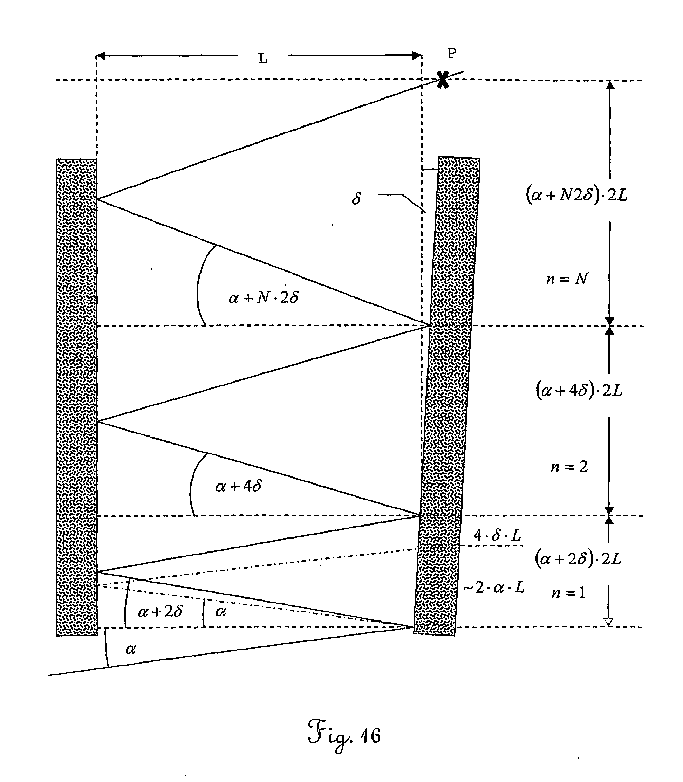

Fig.16 zeigt die geometrischen Verhältnisse beim Auftreten von Justagefehlern für eine Faltvorrichtung. Für eine erfindungsgemäße Faltvorrichtung tritt bei Justagefehlern aufgrund der multiple Reflexion eine Aufaddierung von Fehlern auf. Dies kann bei einer Anordnung der Faltvorrichtung innerhalb der Kavität zu Problemen bis hin zu einer Verletzung der Laserbedingung führen. In Fig.16 werden die Auswirkungen von Justagefehlern graphisch dargestellt und erläutert. Es bezeichnet

$\alpha$ den Einfallswinkel auf ein vertikal bzw. beliebig angestelltes reflektierendes Element einer Faltvorrichtung,

$\delta$ den Fehlerwinkel in der Anstellung des reflektierenden Elements als Justagefehler,

L die Länge zwischen den reflektierenden Elementen,

P den Aufpunkt auf einen reflektierenden Element nach N Durchgängen.

Damit werden in Fig.16 folgende Beziehungen deutlich

$$\delta_n = 2 \cdot n \cdot \delta \qquad (1)$$

als Fehlerwinkel nach n Durchgängen und

$$Y_{tot} = 4 \cdot \delta \cdot L \cdot \sum_{n=1}^{N} n = 2 \cdot \delta \cdot L \cdot \left(N^2 + N\right) \qquad (2)$$

als Gesamtabweichung nach N Durchgängen mit Fehlerwinkel $\delta$ an einem reflektierenden Element. In Bezug auf eine ideale und fehlerfreie Achse der Strahlführung durch die Faltvorrichtung ist klar, dass nach N Reflexionen ein Fehlerwinkel von $2 \cdot N \cdot \delta$ akkumuliert wird, der zu einem Aufpunkt P führt. Der Schnittpunkt zwischen idealem und fehlerbehaftetem Strahl liegt somit nach N Reflexionen die Strecke

$$\frac{Y_{tot}}{\delta_N} = \frac{2 \cdot \delta \cdot L \cdot \left(N^2 + N\right)}{2 \cdot N \cdot \delta} = (N+1) \cdot L \qquad (3)$$

entfernt vom Punkt P, wobei kleine Fehlerwinkel $\delta$ angenommen werden, und ist unabhängig vom Fehlerwinkel $\delta$.

Aufgrund dieser Erkenntnis lassen sich verschiedene Anpassungselemente zur Berücksichtigung von Justagefehlern entwerfen. Beispielsweise kann am Punkt P der in Fig.15 gezeigte gekrümmte Spiegel mit einem Krümmungsradius $R=(N+1) \cdot L$ als Anpassungselement angeordnet werden. Durch diesen Spiegel wird der Strahl in sich oder leicht versetzt durch die Faltvorrichtung zurückreflektiert, so dass die gleichen Abweichungen vom idealen Strahlgang noch einmal durchlaufen werden. Durch diese Bedingung für den Krümmungsradius wird eine 1:1-Abbildung der Kreuzungspunkte zwischen Ideal- und Fehlerstrahlen bewirkt. Hierdurch kann ein beliebiger Fehler kompensiert werden.

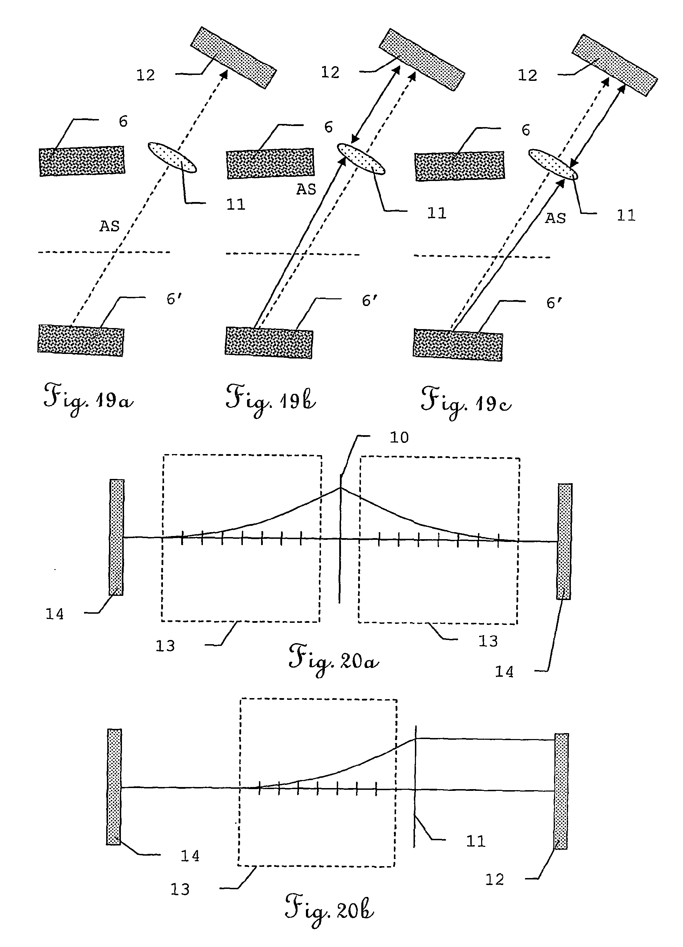

Eine weitere Möglichkeit stellt das Einbringen eines kollimierenden Elementes am Punkt P dar, z.B. der kollimierenden Linse aus Fig.18. Die Brennweite f einer solchen Linse wird dann gemäss $f=(N+1) \cdot L$ gewählt. Alternativ kann auch ein gekrümmter kollimierender Spiegel verwendet werden, wobei dieser einen Krümmungsradius von $R=2 \cdot (N+1) \cdot L$ aufweist. Die Fehlerneutralisierung ist unabhängig vom Fehlerwinkel $\delta$.

Die Ausführung eines Resonators mit einer Faltvorrichtung und einem integrierten Anpassungselement zur Fehlerkompensation verlangt eine Anpassung bzw. Abstimmung der Resonatoroptiken, so dass für die Gauss'sche Grundmode ein stabiler Betrieb möglich ist. Solche in jedem Einzelfall durchzuführenden Anpassungen können beispielsweise mittels Matrixformalismus berechnet werden, wie er z.B. in "Lasers", Siegman, A.E., University Science Books, 1986, ISBN: 0935702113 beschrieben wird.

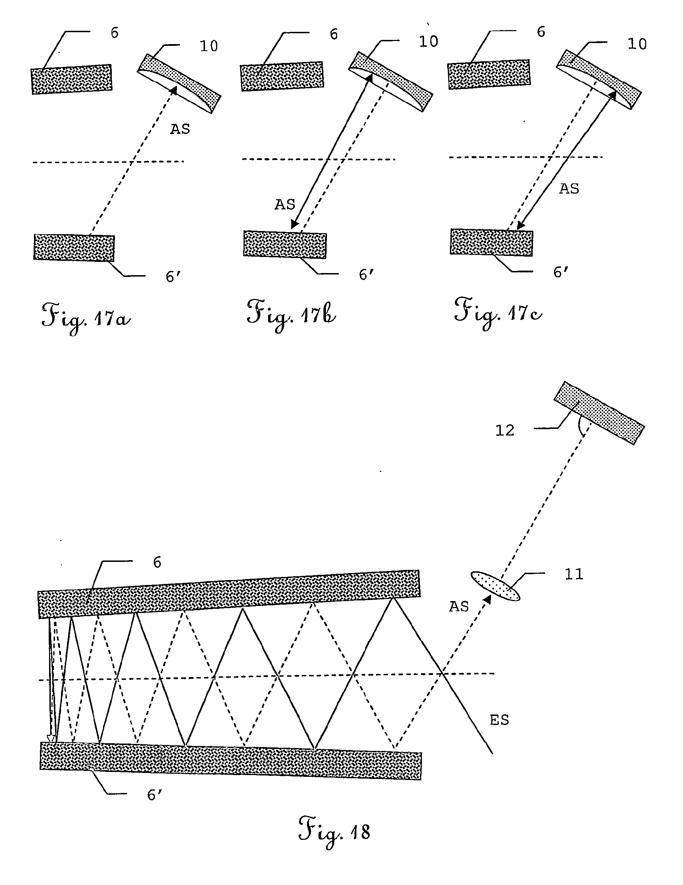

In Fig.17a-c wird eine solche Funktion des ersten Ausführungsbeispiels eines Anpassungselements schematisch dargestellt. Fig.17a zeigt den Strahlgang für eine Ausrichtung der Faltvorrichtung ohne Justagefehler. Der ausfallende Strahl AS fällt auf den Spiegel 10 exakt in dessen Mittelsenkrechter ein und wird in sich zurückreflektiert. Fig.17b zeigt schematisch den Einfluß eines ersten Justagefehlers, durch den der letzte Reflexionspunkt in Richtung auf das Innere der Faltvorrichtung verschoben wird, wobei die Reflexion unter einem steileren Winkel erfolgt. Dadurch trifft der ausfallende Strahl AS ausserhalb des Zentrums des Spiegels 10 auf diesen auf und wird nun wieder in sich zurück auf das reflektierende Element 6' reflektiert. Die Kompensation eines sich entgegengesetzt auswirkenden Justagefehlers zeigt Fig.17c. Der letzte Reflexionspunkt im fehlerbehafteten Fall liegt nun ausserhalb des fehlerfreien Reflexpunktes. Durch den Spiegel 10 erfolgt wiederum eine Rück-Reflexion. Die hier gewählte Darstellung ist rein schematisch.

Fig.18 zeigt die schematische Darstellung einer Faltvorrichtung mit einem zweiten Ausführungsbeispiel eines Anpassungselements. Bei diesem Ausführungsbeispiel erfolgt eine Fehlerkorrektur durch eine den reflektierenden Elementen 6 und 6' nachgeordnete Sequenz aus einer Linse 11 und einem Spiegel 12. Dabei ist die Linse 11 im Abstand ihrer Brennweite vom letzten Reflexionspunkt des reflektierenden Elements 6' positioniert, so dass der ausfallende Strahl durch die Linse 11 kollimiert wird. Hierdurch wird bewirkt, dass bezüglich des nachfolgenden Spiegels 12, der beispielsweise auch einen der Endspiegel des Resonators darstellen kann, die Laserbedingung des Einfalls in der Normalen eingehalten werden.

Die Fig.19a-c erläutern das Funktionsprinzip des zweiten Ausführungsbeispiels schematisch. Fig.19a zeigt den Strahlgang für eine Ausrichtung der Faltvorrichtung ohne Justagefehler. Der ausfallende Strahl AS fällt in der optischen Achse auf die Linse und wird ohne Brechung auf den Spiegel 12 geführt. Fig.19b zeigt schematisch den Einfluß eines ersten Justagefehlers, durch den der letzte Reflexionspunkt in Richtung auf das Innere der Faltvorrichtung verschoben wird, wobei die Reflexion unter einem steileren Winkel erfolgt. Dadurch trifft der ausfallende Strahl AS ausserhalb der optischen Achse auf die Linse 11 und wird durch diese kollimiert, so dass nach der Linse ein zur optischen Achse paralleler Strahlverlauf folgt, so dass weiterhin die Laserbedingung am Spiegel 12 eingehalten wird. Somit erfolgt keine direkte Kompensation des Fehlers. In diesem Ausführungsbeispiel sorgt das Anpassungselement dafür, dass die Auswirkungen von Justagefehlern bezüglich der Faltvorrichtung ein neutrales Ergebnis zur Folge haben. Die Berücksichtigung eines sich entgegengesetzt auswirkenden Justagefehlers zeigt Fig. 19c. Der letzte Reflexionspunkt im fehlerbehafteten Fall liegt nun ausserhalb des Bereichs der fehlerfreien Reflexpunkte. Durch die Linse 11 erfolgt wiederum eine Kollimation, welche die veränderte Lage und deren Folgen auf den Strahlgang neutral hält. Die genaue Form der Linse 11 ist dabei abhängig von der speziellen Geometrie der Faltvorrichtung und der Position des Anpassungselements aus Linse 11 und Spiegel 12.

Fig.20a-b zeigen die schematische Darstellung der Anpassung des Strahlgangs an Justagefehler der Faltvorrichtung.

Fig.20a erläutert die Wirkung des ersten Ausführungsbeispiels des Anpassungselements mit einem gekrümmten Spiegel 10. Die Darstellung zeigt den längenabhängigen Verlauf des Resonators von einem Endspiegel 14 durch die Faltvorrichtung und nachfolgender Reflexion am Spiegel 10 wieder zu dem gleichen Endspiegel 14. Damit zeigt diese Darstellung im horizontalen Verlauf den zweifachen Durchgang durch die Faltvorrichtung. Der gestrichelte Kasten entspricht dem Bereich der multiplen Reflexionen 13 innerhalb der Faltvorrichtung, wobei am Spiegel 10 eine Rückreflexion erfolgt. Vertikal ist das Ausmaß der Abweichung gegenüber dem Strahlgang ohne Justagefehler rein schematisch dargestellt. Im Bereich der multiplen Reflexionen 13 wird zunehmend ein Fehler akkumuliert, der nach der geeigneten Rückreflexion durch den Spiegel 10 wieder schrittweise abgebaut wird. Durch die Kompensation des Fehlers verhält sich die Faltvorrichtung mit ihrem Anpassungselement in Hinblick auf die Bedingungen am Endspiegel 14 neutral gegenüber Justagefehlern.

Fig.20b beschreibt die Bedingungen für das zweite Ausführungsbeispiel eines Anpassungselements. Dargestellt wird wiederum ein Endspiegel 14 eines Resonators. Allerdings wird nun horizontal nicht der doppelte Durchgang durch die Faltvorrichtung dargestellt. Den rechten Abschluß des Strahlgangs bildet in diesem Ausführungsbeispiel der Spiegel 12 des Anpassungselements. Der justagebedingte Fehler wird hier nicht kompensiert sondern es wird durch eine Linse 11 der Strahlgang so gestaltet, dass die Auswirkung des Fehlers konstant gleich Null bleibt, wobei die Laserbedingung am Spiegel 12 eingehalten wird.

Es versteht sich, dass die dargestellten Figuren eine von vielen Ausführungsformen darstellen und der Fachmann alternative Realisierungsformen des Laseraufbaus, z.B. unter Verwendung anderer Laser-Set-ups oder Resonatorkomponenten, ableiten kann. Insbesondere ist es möglich, die Faltvorrichtungen über die angegebenen Beispiele hinaus anders zu gestalten, beispielsweise durch eine Ausformung der reflektierenden Flächen mit sektionsweise variierenden Winkeln, oder die notwendigen Komponenten abweichend anzuordnen.

Auch dienen die abgebildeten Winkel der Strahlverläufe nur zur Erläuterung der Wirkung spezieller Ausgestaltungen der unterschiedlichen Ausführungsformen und können von den exakten physikalischen Bedingungen, z.B. hinsichtlich des Brewster-Gesetzes, aus Darstellungsgründen abweichen. Insbesondere können hieraus keine quantitativen oder limitierenden geometrischen Aussagen abgeleitet werden.

**Patentansprüche**

1. Laseranordnung mit

   - einem Strahlgang und einem verstärkenden Lasermedium (3, 3') zur Erzeugung eines Laserstrahls,
   - einem Laserresonator mit mindestens einem Resonatorspiegel (5),
   - einer Faltvorrichtung mit wenigstens zwei reflektierenden planaren Flächen (6, 6', 6", 6''') zur Faltung des Strahlgangs, wobei die reflektierenden Flächen (6, 6', 6", 6''') so angeordnet sind, dass

      • der Laserstrahl an jeder der reflektierenden Flächen (6, 6', 6", 6''') mehrfach reflektiert wird, und
      • der Strahlgang einen in die Faltvorrichtung einfallenden Strahl und einen aus der Faltvorrichtung ausfallenden Strahl aufweist

   **dadurch gekennzeichnet, dass**

   die reflektierenden Flächen (6, 6', 6", 6''') gegeneinander mit einem, insbesondere einstellbaren, Öffnungswinkel größer 0° orientiert sind.

2. Laseranordnung nach Anspruch 1,
   **dadurch gekennzeichnet, dass**
   wenigstens eine Fläche der reflektierenden Flächen als

      o Aussenfläche;
      o Innenfläche; oder
      o Grenzfläche

   wenigstens einer Komponente der Faltvorrichtung ausgebildet ist.

3. Laseranordnung nach Anspruch 1 oder 2,
   **dadurch gekennzeichnet, dass**
   die Faltvorrichtung einstückig, insbesondere als monolithischer Körper (8,8',8",8'''), ausgebildet ist.

4. Laseranordnung nach einem der vorangehenden Ansprüche,
   **dadurch gekennzeichnet, dass**
   die Faltvorrichtung wenigstens ein Brewster-Fenster (9,9') aufweist.

5. Laseranordnung nach Anspruch 4,
   **dadurch gekennzeichnet, dass**
   die Faltvorrichtung wenigstens zwei aneinandergrenzende Brewster-Fenster aufweist.

6. Laseranordnung nach einem der vorangehenden Ansprüche,
   **dadurch gekennzeichnet, dass**
   die Faltvorrichtung das Lasermedium aufweist oder als das Lasermedium ausgebildet ist.

7. Laseranordnung nach einem der vorangehenden Ansprüche,
   **dadurch gekennzeichnet, dass**
   wenigstens eine erste Fläche (6,6',6'',6''') der reflektierenden Flächen (6,6',6'',6''') eine von einer zweiten der reflektierenden Flächen (6,6',6" ,6" ') abweichende Form, insbesondere eine unterschiedliche Ausdehnung, aufweist.

8. Laseranordnung nach einem der vorangehenden Ansprüche,
   **dadurch gekennzeichnet, dass**
   die erste Fläche (6''') wenigstens einen gegenüber dem planaren Verlauf der Fläche (6''') abgewinkelten Abschnitt aufweist.

9. Laseranordnung nach einem der vorangehenden Ansprüche,
   **dadurch gekennzeichnet, dass**
   die Faltvorrichtung zur Beeinflussung der Eigenschaften des Laserstrahls, insbesondere durch nichtlineare Effekte, ausgebildet ist.

**10.** Laseranordnung nach einem der vorangehenden Ansprüche,
**dadurch gekennzeichnet, dass**
die Faltvorrichtung, insbesondere wenigstens eine der reflektierenden Flächen (6,6',6'',6''') der Faltvorrichtung, wenigstens eine der folgenden Eigenschaften aufweist

o dispersiv,
o unter Licht degradierend,
o frequenzverändernd,
o sättigbar absorbierend.

**11.** Laseranordnung nach einem der vorangehenden Ansprüche,
**gekennzeichnet durch**
ein Anpassungselement zur Berücksichtigung von Justagefehlern.

**12.** Laseranordnung nach Anspruch 11,
**dadurch gekennzeichnet, dass**
das Anpassungselement so ausgelegt und angeordnet ist, dass eine Rückreflexion des Laserstrahls in sich selbst oder leicht versetzt erfolgt, insbesondere durch einen gekrümmten Spiegel (10).

**13.** Laseranordnung nach Anspruch 11,
**dadurch gekennzeichnet, dass**
das Anpassungselement so ausgelegt und angeordnet ist, dass der Laserstrahl kollimiert auf einen Resonatorspiegel (12) geführt wird, insbesondere durch ein reflektives oder refraktives Element (11).

**14.** Laseranordnung nach einem der vorangehenden Ansprüche,
**dadurch gekennzeichnet** das die Faltvorrichtungen zur Streckung oder Kompression von Laserpulsen ausgebildet ist.

**15.** Laseranordnung nach einem der vorangehenden Ansprüche
**gekennzeichnet durch**
wenigstens zwei, insbesondere in Folge angeordnete, Faltvorrichtungen.

**16.** Laseranordnung nach Anspruch 15,
**dadurch gekennzeichnet, dass**
wenigstens eine erste Faltvorrichtung zur Faltung des Strahlgangs des Laserstrahls und wenigstens eine zweite Faltvorrichtung zur Dispersionskorrektur ausgebildet und angeordnet sind.

**17.** Laseranordnung nach einem der vorangehenden Ansprüche,
**gekennzeichnet durch**
wenigstens einen, vorzugsweise einstellbaren, Spiegel (7) zur Ein- und/oder Auskopplung des Laserstrahls in die Faltvorrichtung.

**18.** Laseranordnung nach einem der vorangehenden Ansprüche,
**dadurch gekennzeichnet, dass**
die Faltvorrichtung als ein Ende des Laserresonators ausgebildet und angeordnet ist.

**19.** Laseranordnung nach einem der vorangehenden Ansprüche,
**dadurch gekennzeichnet, dass**
die Laseranordnung als wiederherstellbarer Verstärker ausgebildet ist.

**Claims**

**1.** Laser arrangement comprising

- a beam path and an amplifying laser medium (3, 3') for generating a laser beam,
- a laser resonator having at least one resonator mirror (5),
- a folding device having at least two reflective planar surfaces (6, 6' , 6" , 6''') for folding the beam path, the reflective surfaces (6, 6', 6" , 6''') being arranged so that

- • the laser beam is multiply reflected at each of the reflective surfaces (6, 6', 6" , 6'''), and
- • the beam path has a beam input into the folding device and a beam output from the folding device,

**characterized in that** the reflective surfaces (6, 6', 6'', 6''') are oriented relative to one another with an opening angle, in particular adjustable opening angle, of more than 0°.

2. Laser arrangement according to Claim 1, **characterized in that** at least one surface of the reflective surfaces is in the form of

- o an outer surface;
- o an inner surface; or
- o interface

of at least one component of the folding device.

3. Laser arrangement according to Claim 1 or 2, **characterized in that** the folding device is formed integrally, in particular as a monolithic body (8, 8',8'',8''').

4. Laser arrangement according to any of the preceding Claims, **characterized in that** the folding device has at least one Brewster window (9, 9').

5. Laser arrangement according to Claim 4, **characterized in that** the folding device has at least two Brewster windows adjacent to one another.

6. Laser arrangement according to any of the preceding Claims, **characterized in that** the folding device comprises the laser medium or is in the form of the laser medium.

7. Laser arrangement according to any of the preceding Claims, **characterized in that** at least one first surface (6, 6' , 6" , 6''') of the reflective surfaces (6, 6' , 6" , 6''') has a form deviating from a second surface of the reflective surfaces (6, 6' , 6" , 6'''), in particular a different dimension.

8. Laser arrangement according to any of the preceding Claims, **characterized in that** the first surface (6''') has at least one section angled relative to the planar course of the surface (6''').

9. Laser arrangement according to any of the preceding Claims, **characterized in that** the folding device is formed for influencing the properties of the laser beam, in particular by non-linear effects.

10. Laser arrangement according to any of the preceding claims, **characterized in that** the folding device, in particular at least one of the reflective surfaces (6, 6', 6'', 6''') of the folding device, has at least one of the following properties

- o dispersive,
- odegrading under light,
- o frequency-changing,
- osaturable absorbent.

11. Laser arrangement according to any of the preceding Claims, **characterized by** an adaptation element for taking into account adjustment errors.

12. Laser arrangement according to Claim 11, **characterized in that** the adaptation element is designed and arranged so that back-reflection of the laser beam into itself or with a slight offset occurs, in particular by means of a curved mirror (10).

13. Laser arrangement according to Claim 11, **characterized in that** the adaptation element is designed and arranged so that the laser beam is guided with collimation onto a resonator mirror (12), in particular by a reflective or refractive element (11).

**14.** Laser arrangement according to any of the preceding Claims, **characterized in that** the folding device is formed for stretching or compressing laser pulses.

**15.** Laser arrangement according to any of the preceding Claims, **characterized by** at least two folding devices, in particular arranged in sequence.

**16.** Laser arrangement according to Claim 15, **characterized in that** at least one first folding device is formed and arranged for folding the beam path of the laser beam and at least one second folding device is formed and arranged for dispersion correction.

**17.** Laser arrangement according to any of the preceding Claims, **characterized by** at least one, preferably adjustable, mirror (7) for input and/or output coupling of the laser beam into and/or out of the folding device.

**18.** Laser arrangement according to any of the preceding Claims, **characterized in that** the folding device is formed and arranged as one end of the laser resonator.

**19.** Laser arrangement according to any of the preceding Claims, **characterized in that** the laser arrangement is in the form of a regenerative amplifier.

**Revendications**

**1.** Dispositif à laser comprenant,

- un trajet de rayon et un milieu laser (3, 3') amplificateur, pour produire un rayon laser,
- un résonateur laser comprenant au moins un miroir de résonateur (5),
- un dispositif de repli comprenant au moins deux surfaces (6, 6', 6'' , 6''') planes, réfléchissantes, pour plier le trajet de rayon, les surfaces réfléchissantes (6, 6' , 6' ' , 6''') étant disposées de manière que :

• le rayon laser soit réfléchi plusieurs fois sur chacune des surfaces réfléchissantes (6, 6', 6'', 6'''), et
• le trajet de rayon présente un rayon incident dans le dispositif de repli, et un rayon sortant du dispositif de repli

**caractérisé en ce que**
les surfaces réfléchissantes (6, 6', 6'', 6''') sont orientées les unes par rapport aux autres, avec un angle d'ouverture, en particulier réglable, d'une valeur supérieure à 0°.

**2.** Dispositif laser selon la revendication 1,
**caractérisé en ce qu'**au moins une surface parmi les surfaces réfléchissantes est réalisée sous la forme de

o surface extérieure ;
o surface intérieure ; ou
o surface limite

d'au moins un composant du dispositif de repli.

**3.** Dispositif à laser selon la revendication 1 ou 2,
**caractérisé en ce que**
le dispositif de repli est réalisé de façon monobloc, en particulier sous forme de corps (8, 8', 8'', 8''') monolithique.

**4.** Dispositif à laser selon l'une des revendications précédentes,
**caractérisé en ce que**
le dispositif de repli présente au moins une fenêtre de Brewster (9, 9').

**5.** Dispositif à laser selon la revendication 4,
**caractérisé en ce que**
le dispositif de repli présente au moins deux fenêtres de Brewster limitrophes l'une à l'autre.

**6.** Dispositif à laser selon l'une des revendications précédentes,
**caractérisé en ce que**
le dispositif de repli présente le milieu laser, ou est réalisé sous forme du milieu laser.

**7.** Dispositif à laser selon l'une des revendications précédentes,
**caractérisé en ce qu'**
au moins une première surface (6, 6', 6'', 6''') des surfaces réfléchissantes (6, 6' , 6'', 6''') présente une forme différant d'une deuxième des surfaces réfléchissantes (6, 6' , 6'', 6'''), en particulier une étendue différente.

**8.** Dispositif à laser selon l'une des revendications précédentes,
**caractérisé en ce que**
la première surface (6''') présente un tronçon coudé par rapport à l'allure plane de la surface (6''').

**9.** Dispositif à laser selon l'une des revendications précédentes,
**caractérisé en ce que**
le dispositif de repli est réalisé pour influer sur les propriétés du rayon laser, en particulier par des effets non linéaires.

**10.** Dispositif à laser selon l'une des revendications précédentes,
**caractérisé en ce que**
le dispositif de repli, en particulier au moins l'une des surfaces (6, 6' , 6'' , 6''') réfléchissantes du dispositif de repli, présente au moins l'une des propriétés suivantes

    o dispersif,
    o dégradant sous l'effet de la lumière,
    o modificateur de fréquences,
    o absorbant avec possibilité de saturation.

**11.** Dispositif à laser selon l'une des revendications précédentes,
**caractérisé par**
un élément d'adaptation pour prendre en considération des défauts d'ajustage.

**12.** Dispositif à laser selon l'une des revendications précédentes,
**caractérisé en ce que**
l'élément d'adaptation est conçu et disposé de manière qu'une rétroréflexion du rayon laser, en lui-même ou de façon légèrement décalée, s'effectue, en particulier au moyen d'un miroir (10) courbe.

**13.** Dispositif à laser selon la revendication 11,
**caractérisé en ce que**
l'élément d'adaptation est conçu et disposé de manière que le rayon laser soit guidé de façon collimatée sur un miroir de résonateur (12), en particulier au moyen d'un élément (11) réflectif ou réfractif.

**14.** Dispositif à laser selon l'une des revendications précédentes,
**caractérisé en ce que**
le dispositif de repli est réalisé pour l'étirement ou la compression d'impulsions laser.

**15.** Dispositif à laser selon l'une des revendications précédentes,
**caractérisé par**
au moins deux dispositifs de repli, en particulier disposés à la suite l'un de l'autre.

**16.** Dispositif à laser selon la revendication 15,
**caractérisé en ce que**
au moins un premier dispositif de repli est réalisé et disposé pour plier le trajet de rayon du rayon laser et au moins un deuxième dispositif de repli est réalisé et disposé pour la correction de dispersion.

**17.** Dispositif à laser selon l'une des revendications précédentes,
**caractérisé par**
au moins un miroir (7), de préférence réglable, pour coupler et/ou désaccoupler le rayon laser dans le dispositif de repli.

**18.** Dispositif à laser selon l'une des revendications précédentes,
**caractérisé en ce que**
le dispositif de repli est réalisé et disposé en tant qu'une extrémité du résonateur laser.

**19.** Dispositif à laser selon l'une des revendications précédentes,
**caractérisé en ce que**
le dispositif à laser est réalisé sous forme d'amplificateur susceptible d'être reproduit.

Fig. 1

6

ES

6'

Fig. 2

6

ES

AS

6'

Fig. 3

AS

ES

$\mathcal{F}ig.$ 4

6'

7

ES

AS

$\mathcal{F}ig.$ 5

6'

6''

6'

ES

AS

**Fig. 6**

6'''

6'

ES

AS

**Fig. 7**

Fig. 8

AS

8

ES

Fig. 9

9

8′

$\mathcal{F}ig.$ 10

ES          AS

9′

8′′

$\mathcal{F}ig.$ 11

ES          AS

8′′′

$\mathcal{F}ig.$ 12

ES     AS

Fig. 13

6

AS

6'

3'

*Fig. 14*

ES

6

10

AS

6'

ES

*Fig. 15*

$\mathcal{F}ig.$ 16

Fig. 17a          Fig. 17b          Fig. 17c

Fig. 18

Fig. 19a        Fig. 19b        Fig. 19c

Fig. 20a

Fig. 20b